# EUROPÄISCHE PATENTSCHRIFT

(11) **EP 2 361 495 B1**
(45) Veröffentlichungstag und Bekanntmachung des Hinweises auf die Patenterteilung: **23.01.2013**
(21) Anmeldenummer: 11154703.0
(22) Anmeldetag: 16.02.2011
(51) Int. Cl.: A01F 29/10, A01D 43/08

(54) **Feldhäcksler mit einer Häckseleinrichtung und einer stromab der Häckseleinrichtung angeordneten Nachbearbeitungseinrichtung**
Chaff cutter with a cutter device and a post-processing device downstream from the cutter device
Ensileuse dotée d'un dispositif de hachage et d'un dispositif de post-traitement agencé en aval du dispositif de hachage

(30) Priorität: 25.02.2010 DE 102010002343
(43) Veröffentlichungstag der Anmeldung: 31.08.2011
(73) Patentinhaber: DEERE & COMPANY, Moline, Illinois 61265-8098 (US)
(72) Erfinder: Kormann, Dr. Georg, 66482, Zweibrücken (DE); Willeke, Karl-Josef, 66503, Dellfeld (DE)
(74) Vertreter: Holst, Sönke

(56) Entgegenhaltungen:
- EP-A1- 1 380 204
- DE-A1- 10 030 505

## Beschreibung

Die Erfindung betrifft einen Feldhäcksler mit einer Häckseleinrichtung und einer stromab der Häckseleinrichtung angeordneten Nachbearbeitungseinrichtung mit zwei Walzen, zwischen denen durch die Häckseleinrichtung gehäckseltes Erntegut hindurchführbar ist und deren Abstand und/oder der Anpresskraft durch einen fremdkraftbetätigten, mit einer Steuereinrichtung verbundenen Aktor verstellbar ist.

### Stand der Technik

Im Stand der Technik können die Walzen von Nachbearbeitungseinrichtungen, die in einem Feldhäcksler stromab einer Häckseltrommel angebracht sind, mechanisch in einem definierten Abstand positioniert werden (EP 2 098 110 A2). Dabei stellt sich das Problem einer optimalen Einstellung des Abstandes zwischen den Walzen der Nachbearbeitungseinrichtung. Wird der Abstand klein gewählt, ist zwar ein sicheres Anschlagen im Erntegut enthaltener Körner gewährleistet, jedoch wird (im Verhältnis zu in größerem Abstand angeordneten Walzen) die Förderrate vermindert und der Energiebedarf für den Antrieb der Nachbearbeitungseinrichtung vergrößert. Durch Vergrößern des Abstands vermeidet man diese Nachteile, jedoch werden bei feuchtem Erntegut die Körner wegen ihrer gegenüber trockenem Erntegut größeren Elastizität nicht hinreichend sicher angeschlagen. Dann können mit dem Erntegut gefütterte Tiere es nicht vollständig verdauen.

Die als gattungsbildend angesehene DE 100 30 505 A1 beschreibt eine Nachbearbeitungseinrichtung mit zwei Walzen, deren Abstand oder Anpresskraft selbsttätig in Abhängigkeit von einem Erntegutparameter, insbesondere der Feuchtigkeit, verstellt wird.

Beim Häckseln des Ernteguts wird bereits ein gewisser Anteil der Körner im Erntegut durch die Messer der Häckseltrommel angeschlagen. Dieser Anteil, der umso größer ist, je kleiner die Häcksellänge ist, wird bei der selbsttätigen Einstellung des Abstands zwischen den Walzen der Nachbearbeitungseinrichtung nach DE 100 30 505 A1 nicht berücksichtigt.

Das der Erfindung zugrunde liegende Problem wird darin gesehen, bei einem möglichst geringen Antriebsleistungsbedarf der Nachbearbeitungseinrichtung ein sicheres Anschlagen im Erntegut enthaltener Körner zu erzielen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Feldhäcksler ist in an sich bekannter Weise mit einer Häckseleinrichtung und einer bezüglich des Erntegutflusses stromab der Häckseleinrichtung angeordneten Nachbearbeitungseinrichtung ausgestattet. Die Nachbearbeitungseinrichtung umfasst zwei Walzen, zwischen denen im Erntebetrieb das gehäckselte Erntegut hindurchgeführt wird, um im Erntegut enthaltene Körner anzuschlagen und die Verdaulichkeit des erzeugten Futters durch das Vieh zu verbessern. Der Steuereinrichtung wird im Erntebetrieb eine Information hinsichtlich der jeweiligen (Ist- oder Soll-) Häcksellänge zugeführt. Die Steuerung kontrolliert einen fremdkraftbetätigten Aktor, der den Abstand zwischen den Walzen der Nachbearbeitungseinrichtung oder und/oder die Anpresskraft verstellt, mit der eine Walze auf die andere Walze drückt. Dabei wird die jeweilige Häcksellänge des Ernteguts durch die Steuerung berücksichtigt.

Auf diese Weise erreicht man, dass die Körner anschlagende oder zerschneidende Wirkung der Häckseleinrichtung, welche von der Schnittlänge des Ernteguts abhängt, bei der Einstellung des Abstands der Walzen der Nachbearbeitungseinrichtung und/oder der Andrückkraft der Walzen berücksichtigt wird. Insbesondere sinkt der Abstand mit steigender Häcksellänge ab, bzw. die Kraft steigt mit steigender Häcksellänge an. Demnach wird bei kleinen Häcksellängen der Antriebsleistungsbedarf der Nachbearbeitungseinrichtung vermindert und bei großen Häcksellängen ein sicheres Anschlagen der Körner sichergestellt.

Zusätzlich kann die Steuereinrichtung den Aktor in Abhängigkeit von einem gemessenen Parameter des Ernteguts kontrollieren. Bei diesem Parameter kann es sich insbesondere um die Feuchtigkeit des Ernteguts handeln. Dadurch wird unabhängig von den Eigenschaften des Ernteguts ein sicheres Anschlagen der im Erntegut enthaltenen Körner erzielt und eine optimale Ausnutzung des Nährwerts des Ernteguts beim Verfüttern an Tiere erreicht. Anstelle der (oder zusätzlich zur) Feuchtigkeit kann beispielsweise der Gehalt des Gutes an Körnern gemessen werden, was anhand des Nährstoffgehalts festgestellt werden kann, der mittels eines entsprechenden Sensors erfassbar ist (vgl. DE 199 22 867 A1 ). Auch kann der Körneranteil optisch gemessen werden. Ist das Erntegut relativ feucht, sind die in ihm enthaltenen Körner elastischer als bei trockenem Erntegut. Aus diesem Grund lassen sie sich von der Nachbearbeitungseinrichtung schwerer anschlagen. Vorzugsweise wird daher von der erfindungsgemäßen Vorrichtung der Abstand zwischen den Walzen bei trockenem Erntegut größer eingestellt als bei feuchtem Erntegut. Analog wird die Anpresskraft bei feuchtem Gut größer als bei trockenem Gut gewählt.

Bei einer bevorzugten Ausführungsform der Erfindung ist die Steuereinrichtung mit einer Bedienereingabeeinrichtung verbunden, die zur Eingabe eines gewünschten Bearbeitungsgrades des Ernteguts durch die Nachbearbeitungseinrichtung dient. Der Bediener kann somit beispielsweise einstellen, ob er eine feinstmögliche Bearbeitung des Ernteguts oder einen möglichst geringen Antriebsleistungsbedarf der Nachzerkleinerungseinrichtung wünscht. Auch mehrere oder beliebig viele Zwischenstufen sind möglich. Die Steuereinrichtung berücksichtigt die Eingabe des Bedieners und verstellt den Aktor entsprechend. Bei der feinstmöglichen Bearbeitung des Ernteguts wird demnach der Abstand zwischen den Walzen verkleinert bzw. die Anpresskraft vergrößert. Analog wird der Abstand bei einem gewünschten, minimalen Antriebsleistungsbedarf vergrößert und/oder die Anpresskraft der Walzen vermindert.

Die der Steuereinrichtung zugeführte Information über die aktuelle Schnittlänge kann auf einem Sollwert beruhen, der einer geeigneten Einrichtung zur Verstellung der Schnittlänge zugeführt wird, beispielsweise einem Hydromotor zum Antrieb einer Zuführeinrichtung, die das ungeschnittene Erntegut der Häckseltrommel zuführt, oder einem verstellbaren Getriebe zum Antrieb einer Zuführeinrichtung. Es besteht aber auch die Möglichkeit, die aktuelle Schnittlänge durch eine Sensoranordnung zu erfassen, beispielsweise mittels einer Kamera und eines Bildverarbeitungssystems (s. EP 1 671 530 A1 und EP 2 098 109 A1) und der Steuereinrichtung eine Information über die aktuelle Schnittlänge zuzuführen.

Besonders vorteilhaft ist auch eine Ausführungsform der Erfindung, bei welcher die Steuereinrichtung durch eine Sensoranordnung über den Anteil der angeschlagenen (und/oder der nicht angeschlagenen) Körner im Erntegut informiert wird, die ebenfalls mit einer Kamera und einem Bildverarbeitungssystem arbeiten kann. Hierzu wird auf die nachveröffentlichte europäische Patentanmeldung 09156078.9 verwiesen, deren Offenbarung durch Verweis mit in die vorliegenden Unterlagen aufgenommen wird. Die Steuereinrichtung kann den Aktor entsprechend dem erfassten Anteil der angeschlagenen Körner ansteuern, um zu erreichen, dass ein (fest vorgegebener oder durch den Bediener) eingebbarer Anteil angeschlagener Körner erreicht wird.

In den Zeichnungen ist ein nachfolgend näher beschriebenes Ausführungsbeispiel der Erfindung dargestellt. Es zeigt:
Fig. 1 eine Erntemaschine in Seitenansicht und in schematischer Darstellung; und
Fig. 2 eine Nachbearbeitungseinrichtung mit der zur Regelung des Abstandes der Walzen dienenden Steuereinrichtung.

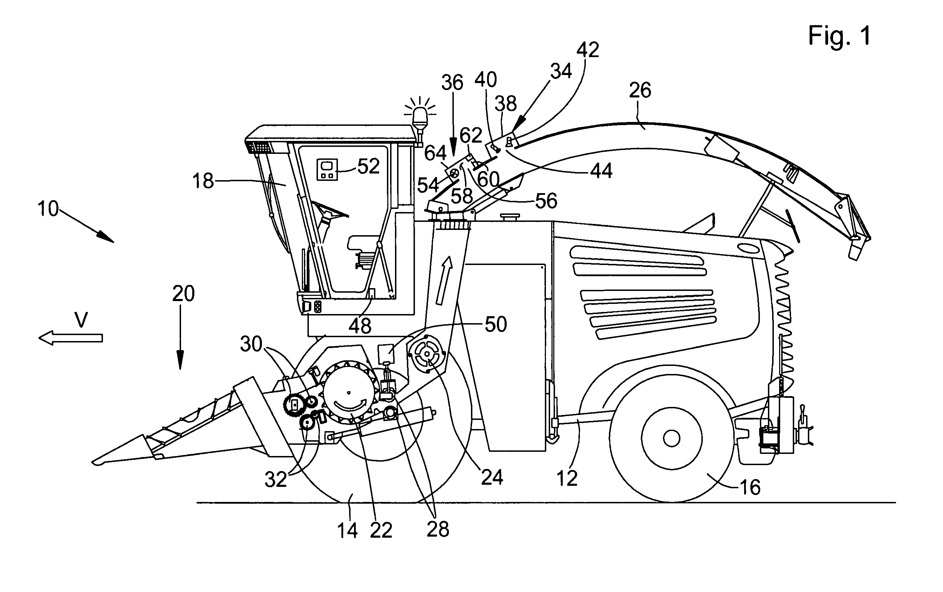

In der Figur 1 ist ein selbstfahrender Feldhäcksler 10 in schematischer Seitenansicht dargestellt. Der Feldhäcksler 10 baut sich auf einem Rahmen 12 auf, der von vorderen angetriebenen Rädern 14 und lenkbaren rückwärtigen Rädern 16 getragen wird. Die Bedienung des Feldhäckslers 10 erfolgt von einer Fahrerkabine 18 aus, von der aus ein Erntevorsatz 20 in Form eines Mähvorsatzes für die Maisernte einsehbar ist. Mittels des Erntevorsatzes 20 vom Boden aufgenommenes Erntegut, z. B. Gras oder dergleichen wird über einen Einzugsförderer mit oberen Vorpresswalzen 30 und unteren Vorpresswalzen 32, die innerhalb eines Einzugsgehäuses an der Frontseite des Feldhäckslers 10 angeordnet sind, einer unterhalb der Fahrerkabine 18 angeordneten Häckseleinrichtung 22 in Form einer Häckseltrommel zugeführt, die es in kleine Stücke häckselt und es einer Fördervorrichtung 24 aufgibt. Das Gut verlässt die Arbeitsmaschine 10 zu einem nebenher fahrenden Transportfahrzeug über einen Auswurfschacht und einen um eine etwa vertikale Achse drehbaren und in der Neigung verstellbaren Auswurfkrümmer 26. Im Folgenden beziehen sich Richtungsangaben, wie seitlich, unten und oben, auf die Vorwärtsbewegungsrichtung V des Feldhäckslers 10, die in der Figur 1 nach links verläuft.

Zwischen der Häckseltrommel 22 und der Fördervorrichtung 24 ist eine Nachbearbeitungseinrichtung mit zwei zusammenwirkenden Walzen 28 angeordnet, durch die das geförderte Gut der Fördervorrichtung 24 tangential zugeführt wird. Die Walzen 28 der Nachbearbeitungseinrichtung werden gegensinnig rotativ angetrieben. Zwischen ihnen wird der Strom des gehäckselten Gutes hindurchgeführt. Die Aufgabe der Walzen 28 besteht darin, Körner (insbesondere Maiskörner) des Ernteguts anzuschlagen, damit diese von Tieren, die mit dem Häckselgut gefüttert werden, verdaut werden können. Die Oberflächen der Walzen der auch als Körnerprozessor bezeichneten Nachbearbeitungseinrichtung können in an sich bekannter Weise aufgeraut, glatt oder profiliert sein.

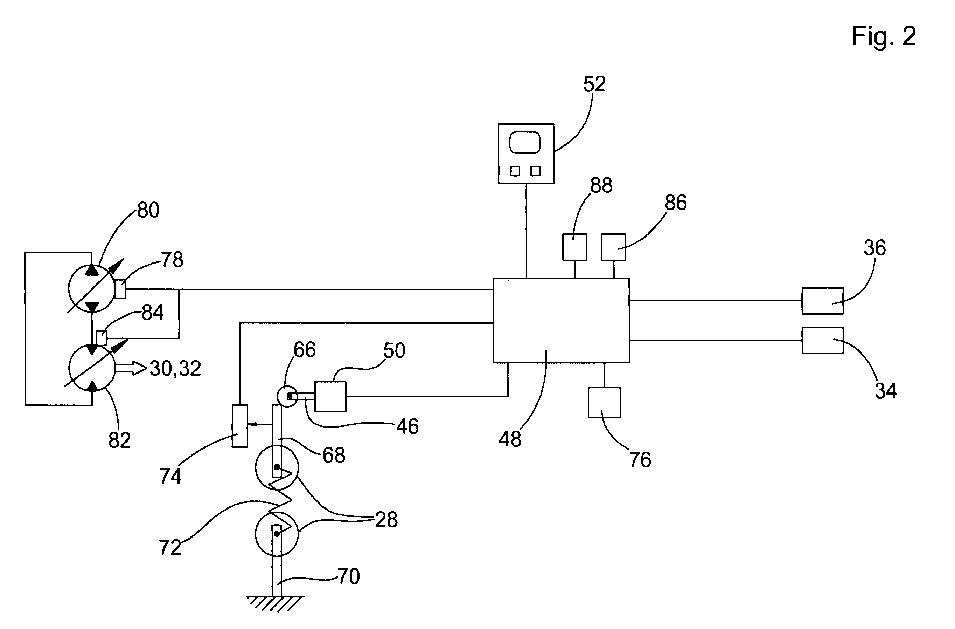

Der Abstand der Walzen 28 der Nachbearbeitungseinrichtung wird durch eine Steuereinrichtung 48 gesteuert, wie im Folgenden anhand der Figur 2 erläutert wird. Die Steuereinrichtung 48 ist dazu mit einem Aktor 50 in Form eines Elektromotors verbunden, dessen Ausgangswelle 46 einen Exzenter 66 antreibt, der wiederum einen Halter 68 in vertikaler Richtung verstellt. Anders als in der Figur 2 gezeigt, können die Ausgangswelle 46 des Aktors 50 und die Drehachse des Exzenters 66 orthogonal zur Zeichenebene orientiert sein. Am Halter 68 ist die obere Walze 28 der Nachbearbeitungseinrichtung befestigt. Die untere Walze 28 der Nachbearbeitungseinrichtung ist an einem mit dem Rahmen 12 starr verbundenen Halter 70 angebracht. Die Halter 68, 70 werden durch eine Feder 72 zusammengezogen, gegen deren Kraft das Erntegut die Walzen 28 auseinander bewegen kann. Der Exzenter 68 definiert den maximalen Abstand zwischen den Walzen 28, welcher durch den Aktor 50 veränderbar ist. Ein Sensor 74 in Form eines Potentiometers führt der Steuereinrichtung 48 eine Information über den aktuellen Abstand der Walzen 28 zu. Beispiele für einen möglichen mechanischen Aufbau der Verstellanordnung der Walzen 28 sind in der EP 2 098 110 A2 und der DE 100 30 505 A1 wiedergegeben. Die Figur 2 stellt nur ein prinzipielles Schema dar.

Die Steuereinrichtung 48 ist mit einem Speicher 76 und mit einer Bedienereingabeeinrichtung 52 verbunden, die sich in der Kabine 18 befindet. Weiterhin ist die Steuereinrichtung 48 mit einem Aktor 78 verbunden, der eine Taumelscheibe einer Hydropumpe 80 kontrolliert. Die Hydropumpe 80 treibt einen Hydromotor 82 an, der wiederum die Vorpresswalzen 30 und 32 über ein dazwischen geschaltetes Getriebe (nicht gezeigt) antreibt. Auch das Schluckvolumen des Hydromotors 82 kann durch einen von der Steuereinrichtung 48 kontrollierten Aktor 84 verstellt werden. Es wäre aber auch denkbar, einen Hydromotor 82 mit nicht-verstellbarem Schluckvolumen einzusetzen; dann entfällt der Aktor 84. Ein Drehzahlsensor 86 führt der Steuereinrichtung 48 Daten hinsichtlich der Drehzahl der Häckseleinrichtung 22 zu. Ein weiterer, optionaler Drehzahlsensor 88 kann der Steuereinrichtung 48 Daten hinsichtlich der Drehzahl der Vorpresswalzen 30 und/oder 32 zuführen.

An der Oberseite des Auswurfkrümmers ist eine erste Sensoranordnung 34 angebracht. Sie umfasst eine Blitzlampe 40 und eine Kamera 42, die durch ein Fenster 44 mit einer Scheibe mit dem im Auswurfkrümmer 26 geförderten, gehäckselten und durch die Walzen 28 der Nachbearbeitungseinrichtung bearbeiteten Erntegut zusammenwirken. Die Blitzlampe 40 beleuchtet das Erntegut in zeitlichen Abständen und die Kamera 42 erfasst Bilder des Ernteguts. Ein im Gehäuse 38 der ersten Sensoranordnung 34 integriertes Bildverarbeitungssystem leitet aus den Bildern der Kamera 42 die aktuelle Schnittlänge ab und führt der Steuereinrichtung 48 entsprechende Daten zu. Außerdem kann das Bildverarbeitungssystem den Anteil angeschlagener (oder nicht angeschlagener) Körner im Erntegut erfassen und der Steuereinrichtung 48 übermitteln, welche die Anteile dem Bediener auf dem Bildschirm der Bedienereingabeeinrichtung 52 anzeigen kann. Hierzu wird auf die Offenbarungen der EP 1 671 530 A1, EP 2 098 109 A1 und der europäischen Patentanmeldung 09156078.9 verwiesen.

An der Oberseite des Auswurfkrümmers ist auch eine zweite Sensoranordnung 36 angebracht. Sie ist in der Figur 1 stromauf der ersten Sensoranordnung 34 positioniert, könnte aber auch stromab davon oder seitlich neben ihr angebracht werden. Die zweite Sensoranordnung 36 ist ein im Nahinfrarotbereich (NlR) arbeitendes Spektrometer, das durch ein Fenster 56 mit einer Scheibe mit dem im Auswurfkrümmer 26 geförderten, gehäckselten und durch die Walzen 28 der Nachbearbeitungseinrichtung bearbeiteten Erntegut zusammenwirkt. Die zweite Sensoranordnung 36 umfasst ein Gehäuse 64, eine Lichtquelle 54, die das Erntegut beleuchtet, einen Spiegel 58 mit einem Beugungsgitter, der das vom Erntegut reflektierte Licht wellenlängenabhängig in unterschiedliche Richtungen ablenkt, einen Photodetektor 60 mit mehreren sensitiven Elementen und eine Auswertungseinrichtung 62. Die Auswertungseinrichtung 62 erhält vom Photodetektor 60 Daten hinsichtlich der einzelnen Wellenlängen zugeordneten Intensitäten des vom Erntegut reflektierten Lichts und leitet daraus Daten hinsichtlich der Eigenschaften des Ernteguts ab, insbesondere hinsichtlich der Inhaltsstoffe, wie Wasser, Proteine und dergleichen. Hierzu sei auf die Offenbarung der DE 199 22 867 A1 verwiesen. Die Auswertungseinrichtung 62 führt der Steuereinrichtung 48 Daten hinsichtlich der Feuchtigkeit des Ernteguts zu.

Nach alledem ergibt sich folgende Erntebetriebsweise der Steuereinrichtung 48 und der mit ihr verbundenen Komponenten. Der Bediener kann über die Bedienereingabeeinrichtung 52 eine gewünschte Schnittlänge des Ernteguts eingeben. Alternativ kann er mittels der Bedienereingabeeinrichtung 52 eine Betriebsart auswählen, in der die Schnittlänge selbsttätig abhängig von der mittels der zweiten Sensoranordnung 36 gemessenen Feuchte des Ernteguts eingestellt wird, wobei in der Regel auch in dieser Betriebsart manuelle Korrekturen mittels der Bedienereingabeeinrichtung 52 möglich sind. Die Steuereinrichtung 48 kontrolliert dann die Drehzahl des Hydromotors 82 mittels der Aktoren 78 und ggf. 84. Als Rückkopplungswert für die aktuelle Schnittlänge dienen die Messwerte der Drehzahlsensoren 86 und 88 oder die Daten von der ersten Sensoranordnung 34, oder sie wird aus der Eingangsdrehzahl der Hydropumpe 80 und der Stellung der Aktoren 78 und ggf. 84 abgeleitet (vgl. DE 102 42 885 A1).

Die Einstellung des maximalen Spaltes zwischen den Walzen 28 der Nachbearbeitungseinrichtung mittels des Aktors 50 erfolgt basierend auf der ausgewählten oder gemessenen Schnittlänge. Dadurch wird berücksichtigt, dass bei kürzeren Schnittlängen ein größerer Anteil der Körner durch die Häckseleinrichtung 22 angeschlagen oder aufgeschnitten wird, sodass der Spalt bei größeren Häcksellängen kleiner eingestellt wird als bei kleineren Häcksellängen. Außerdem wird der Spalt in Abhängigkeit von der - mit der zweiten Sensoranordnung 36 erfassten - Feuchtigkeit des geförderten Gutes verstellt. Da im Erntegut enthaltene Körner umso schwerer angeschlagen werden, je feuchter das Erntegut ist, da die Körner dann elastischer sind, wird bei trockenem Erntegut durch die Steuereinrichtung 48 ein größerer Abstand zwischen den Walzen 28 eingestellt als bei feuchtem Erntegut. Auf diese Weise vermeidet man bei trockenem Erntegut und/oder kleinen Schnittlängen den mit einem relativ kleinen Spalt verbundenen, vergrößerten Energiebedarf für den Antrieb der Nachbearbeitungseinrichtung, welcher größer als bei einem großen Spalt ist, bzw. eine manuelle Verstellung des Abstands zwischen den Walzen 28. Die Bedienereingabeeinrichtung 52 ermöglicht es zusätzlich, den Bearbeitungsgrad des Ernteguts durch die Nachzerkleinerungseinrichtung auszuwählen, beispielsweise über eine Menüsteuerung oder einen Drehknopf. Der Bediener kann somit bestimmen, ob das Erntegut feinstmöglich bearbeitet wird, oder ob eine weniger gründliche, aber dafür Antriebsleistung für die Walzen 28 sparende Bearbeitung des Ernteguts erfolgen soll.

Die Steuereinrichtung 48 entnimmt dann aus einer im Speicher 76 abgelegten Tabelle den Sollwert für den Abstand der Walzen 28, der jeweils von der Schnittlänge, der Feuchtigkeit und dem gewählten Bearbeitungsgrad abhängt. Alternativ könnten auch Kurven oder Gleichungen zur Bestimmung des Sollwerts für den Abstand der Walzen 28 herangezogen werden. Die Steuereinrichtung 48 weist dann den Aktor 50 an, den Abstand der Walzen 28 auf den Sollwert zu verbringen, wobei die Signale des Sensors 74 als Rückkopplungswerte dienen.

Anzumerken ist, dass verschiedene Modifikationen der Erfindung denkbar sind. So wäre es denkbar, anstelle des Nahinfrarotspektrometers der zweiten Sensoranordnung 36 einen beliebigen anderen Feuchtigkeitssensor zu verwenden, z. B. einen kapazitiven Sensor, einen Mikrowellensensor oder einen Leitfähigkeitssensor. Die zweite Sensoranordnung 36 kann auch an einer Stelle der Erntemaschine 10 zwischen der Häckseleinrichtung 22 und dem Drehkranz des Auswurfkrümmers 26 oder stromauf der Häckseleinrichtung 22 angeordnet sein.

## Patentansprüche

1. Feldhäcksler (10) mit einer Häckseleinrichtung (22) und einer stromab der Häckseleinrichtung (22) angeordneten Nachbearbeitungseinrichtung mit zwei Walzen (28), zwischen denen durch die Häckseleinrichtung (22) gehäckseltes Erntegut hindurchführbar ist und deren Abstand und/oder der Anpresskraft durch einen fremdkraftbetätigten, mit einer Steuereinrichtung (48) verbundenen Aktor (50) verstellbar ist, **dadurch gekennzeichnet, dass** die Steuereinrichtung (48) mit einer Information hinsichtlich derjeweiligen Schnittlänge der Häckseleinrichtung (22) beaufschlagbar ist und dass die Steuereinrichtung (48) betreibbar ist, den Aktor (50) abhängig von der Schnittlänge anzusteuern.

2. Feldhäcksler (10) nach Anspruch 1, **dadurch gekennzeichnet, dass** die Steuereinrichtung (48) betreibbar ist, den Abstand zwischen den Walzen (28) mit steigender Schnittlänge zu vermindern und/oder die Anpresskraft mit steigender Schnittlänge zu vergrößern.

3. Feldhäcksler (10) nach Anspruch 1 oder 2, **dadurch gekennzeichnet, dass** die Steuereinrichtung (48) mit einer Information hinsichtlich eines gemessenen Parameters des Ernteguts beaufschlagbar ist und dass die Steuereinrichtung (48) betreibbar ist, den Aktor (50) zusätzlich abhängig von dem Parameter anzusteuem.

4. Feldhäcksler (10) nach Anspruch 3, **dadurch gekennzeichnet, dass** der Parameter des Emteguts die Feuchtigkeit ist.

5. Feldhäcksler (10) nach einem der Ansprüche 1 bis 4, **dadurch gekennzeichnet, dass** die Steuereinrichtung (48) mit einer Bedienereingabeeinrichtung (52) verbunden ist, mit welcher ein Bediener einen gewünschten Bearbeitungsgrad des Ernteguts eingeben kann und dass die Steuereinrichtung (48) betreibbar ist, den Aktor (50) zusätzlich abhängig von dem eingegebenen gewünschten Bearbeitungsgrad anzusteuern.

6. Feldhäcksler (10) nach Anspruch 5, **dadurch gekennzeichnet, dass** der Bearbeitungsgrad zwischen einer feinstmöglichen Bearbeitung des Emteguts und einer Stellung niedrigsten Antriebsleistungsbedarfs der Nachbearbeitungseinrichtung wählbar ist.

7. Feldhäcksler (10) nach einem der Ansprüche 1 bis 6, **dadurch gekennzeichnet, dass** die Steuereinrichtung (48) mit einer Sensoranordnung (34, 36) zur Erfassung der aktuellen Schnittlänge und/oder des Anteils der angeschlagenen und/oder nicht angeschlagenen Körner im Erntegut verbunden ist.

## Claims

1. Chaff cutter (10) with a cutter device (22) and a post-processing device downstream from the cutter device (22), with two rolls (28) between which crop cut by the cutter device (22) can be guided and the distance and/or press-on force of which can be adjusted by an actuator (50) which is actuated by an external force and is connected to a control device (48), **characterized in that** the control device (48) can be impinged with information regarding the particular length of cut of the cutter device (22), and **in that** the control device (48) can be operated so as to activate the actuator (50) depending on the length of cut.

2. Chaff cutter (10) according to Claim 1, **characterized in that** the control device (48) can be operated so as to reduce the distance between the rolls (28) as the length of cut increases and/or to increase the press-on force as the length of cut increases.

3. Chaff cutter (10) according to Claim 1 or 2, **characterized in that** the control device (48) can be impinged with information regarding a measured parameter of the crop, and **in that** the control device (48) can be operated so as additionally to activate the actuator (50) depending on the parameter.

4. Chaff cutter (10) according to Claim 3, **characterized in that** the parameter of the crop is the moisture.

5. Chaff cutter (10) according to one of Claims 1 to 4, **characterized in that** the control device (48) is connected to an operator input device (52) with which an operator can input a desired degree of processing of the crop, and **in that** the control device (48) can be operated so as additionally to activate the actuator (50) depending on the input desired degree of processing.

6. Chaff cutter (10) according to Claim 5, **characterized in that** the degree of processing can be selected between processing of the crop as finely as possible and a position of the post-processing device requiring the lowest amount of driving power.

7. Chaff cutter (10) according to one of Claims 1 to 6, **characterized in that** the control device (48) is connected to a sensor arrangement (34, 36) for detecting the current length of cut and/or the portion of crop grains which have been beaten and/or not beaten.

## Revendications

1. Ensileuse (10) comprenant un dispositif de hachage (22) et un dispositif de post-traitement disposé en aval du dispositif de hachage (22), comprenant deux rouleaux (28), entre lesquels le produit de récolte haché peut être guidé à travers le dispositif de hachage (22) et dont la distance et/ou la force de pressage peut être ajustée par un actionneur (50) connecté à un dispositif de commande (48), actionné par une force extérieure, **caractérisée en ce que** le dispositif de commande (48) peut recevoir une information concernant la longueur de coupe respective du dispositif de hachage (22) et **en ce que** le dispositif de commande (48) peut fonctionner de manière à commander l'actionneur (50) en fonction de la longueur de coupe.

2. Ensileuse (10) selon la revendication 1, **caractérisée en ce que** le dispositif de commande (48) peut fonctionner de manière à réduire la distance entre les rouleaux (28) avec une longueur de coupe croissante, et/ou à augmenter la force de pressage avec une longueur de coupe croissante.

3. Ensileuse (10) selon la revendication 1 ou 2, **caractérisée en ce que** le dispositif de commande (48) peut recevoir une information concernant un paramètre mesuré du produit de récolte et **en ce que** le dispositif de commande (48) peut fonctionner de manière à commander l'actionneur (50) en outre en fonction du paramètre.

4. Ensileuse (10) selon la revendication 3, **caractérisée en ce que** le paramètre du produit de récolte est l'humidité.

5. Ensileuse (10) selon l'une quelconque des revendications 1 à 4, **caractérisée en ce que** le dispositif de commande (48) est connecté à un dispositif de saisie par l'opérateur (52), avec lequel un opérateur peut saisir un degré de traitement souhaité du produit de récolte et **en ce que** le dispositif de commande (48) peut fonctionner de manière à commander l'actionneur (50) en outre en fonction du degré de traitement souhaité saisi.

6. Ensileuse (10) selon la revendication 5, **caractérisée en ce que** le degré de traitement peut être sélectionné entre un traitement aussi fin que possible du produit de récolte et une position de besoin de puissance d'entraînement minimal du dispositif de post-traitement.

7. Ensileuse (10) selon l'une quelconque des revendications 1 à 6, **caractérisée en ce que** le dispositif de commande (48) est connecté à un agencement de capteur (34, 36) pour détecter la longueur de coupe actuelle et/ou la proportion des grains battus et/ou non battus dans le produit de récolte.
